# EUROPÄISCHE PATENTSCHRIFT

(11) **EP 2 379 375 B1**
(45) Veröffentlichungstag und Bekanntmachung des Hinweises auf die Patenterteilung: **11.12.2019**
(21) Anmeldenummer: 09740130.1
(22) Anmeldetag: 22.10.2009
(51) Int. Cl.: B60T 1/10, B60T 13/58, B60T 13/74

(54) **BREMSANLAGE FÜR EIN KRAFTFAHRZEUG UND VERFAHREN ZU DEREN STEUERUNG**
BRAKE SYSTEM FOR A MOTOR VEHICLE AND METHOD FOR CONTROLLING SAID BRAKE SYSTEM
INSTALLATION DE FREINAGE DE VÉHICULE AUTOMOBILE ET PROCÉDÉ DE COMMANDE

(30) Priorität: 18.12.2008 DE 102008054847
(43) Veröffentlichungstag der Anmeldung: 26.10.2011
(73) Patentinhaber: Robert Bosch GmbH, 70442 Stuttgart (DE)
(72) Erfinder: VOLLERT, Herbert, 71665 Vaihingen/Enz (DE); WEIBERLE, Reinhard, 71665 Vaihingen/Enz (DE); KUNZ, Michael, 71711 Steinheim An Der Murr (DE); KOLARSKY, Jens, 74321 Bietigheim/Bissingen (DE)
(86) Internationale Anmeldenummer: PCT/EP2009/063910
(87) Internationale Veröffentlichungsnummer: WO 2010/069655

(56) Entgegenhaltungen:
- DE-A1- 4 124 496
- DE-A1-102007 043 592
- US-A1- 2003 038 541

## Beschreibung

### Stand der Technik

Die Erfindung betrifft eine Bremsanlage für ein Kraftfahrzeug mit einem hydraulischen Muskel- und Hilfskraftbremssystem mit den Merkmalen des Oberbegriffs des Anspruchs 1 sowie ein Verfahren zu deren Steuerung mit den Merkmalen des Oberbegriffs des Anspruchs 6. Unter einer "Steuerung" im Sinne der Erfindung ist auch eine "Regelung" zu verstehen.

Die Offenlegungsschrift DE 103 19 663A1 offenbart eine Bremsanlage für ein Kraftfahrzeug, das ein hydraulisches Hilfskraftbremssystem und ein elektromechanisches Fremdkraftbremssystem aufweist. Das Hilfskraftbremssystem wirkt beispielsweise auf Räder einer Vorderachse und das Fremdkraftbremssystem beispielsweise auf Räder einer Hinterachse des Kraftfahrzeugs. Das Hilfskraftbremssystem ist von an sich bekannter Bauart und weist einen mit Muskelkraft beispielsweise mit einem (Fuß-)Bremspedal oder einem (Hand-)Bremshebel betätigbaren Hauptbremszylinder auf, an den hydraulische Radbremsen angeschlossen sind. Der Hauptbremszylinder weist einen Unterdruck-Bremskraftverstärker auf, dessen Kraftverstärkung unabhängig von der Muskelkraftbetätigung steuerbar ist.

Das Fremdkraftbremssystem weist elektromechanische Radbremsen auf, die beispielsweise mit einem Elektromotor über ein Getriebe zuspannbar sind. Elektromechanische Radbremsen in selbstverstärkender- und nicht -selbstverstärkender Bauweise sind bekannt, beispielhaft für eine elektromechanische Radbremse wird hingewiesen auf die Offenlegungsschrift DE 100 56 451 A1.

Unabhängig von der Art der Bremsanlage sind sog. Hybrid-Fahrzeuge mit einem Verbrennungsmotor und einem (oder auch mehreren) Elektro-Antriebsmotor bekannt, die je nach Fahrsituation vom Verbrennungsmotor, dem Elektro-Antriebsmotor oder auch von beiden Motoren angetrieben werden. Zum Bremsen kann der Elektro-Antriebsmotor als Generator betrieben werden. Die Bremsleistung des Elektro-Antriebsmotors im Generatorbetrieb ist abhängig u.a. von der Fahrzeuggeschwindigkeit, ein Abbremsen bis zum Stillstand ist mit dem Elektro-Antriebsmotor nicht möglich. Auch ist die Bremswirkung des Elektro-Antriebsmotors im Generatorbetrieb abhängig vom Ladezustand einer Fahrzeugbatterie (eigentlich ein Akkumulator), bei voll geladener Fahrzeugbatterie ist eine Bremsung mit dem Elektro-Antriebsmotor im Generatorbetrieb nicht möglich.

Auch wenn beim Schalten mit einem nicht-automatischen Getriebe eine Kupplung getreten wird, wird der Elektro-Antriebsmotor, wenn er nicht den Fahrzeugrädern zugeordnet ist, mechanisch von den Fahrzeugrädern getrennt, so dass die Bremswirkung unterbrochen ist. Ein Ausgleich der Bremswirkung des Elektro-Antriebsmotors im Generatorbetrieb zur Gesamtbremswirkung des Fahrzeuges kann einem Fahrzeugführer überlassen werden. Möglich ist auch eine beispielsweise elektronische Steuerung der Bremswirkung der Bremsanlage, die den Anteil der Bremswirkung, die der Elektro-Antriebsmotor aufbringt, mehr oder weniger gut ausgleicht. Die Steuerung der Bremswirkung der Bremsanlage in Abhängigkeit von der Bremswirkung des Elektro-Antriebsmotors im Generatorbetrieb kann als "Verblenden" bezeichnet werden.

Dokument DE10 2007 043 592 A1 offenbart eine Bremsanlage gemäß dem Oberbegriff des Anspruchs 1.

### Offenbarung der Erfindung

Die erfindungsgemäße Bremsanlage mit den Merkmalen des Anspruchs 1 weist ein hydraulisches Muskel- und Hilfskraftbremssystem und ein hydraulisches Fremdkraftbremssystem auf. Hilfskraftbremssystem bedeutet, dass ein Hauptbremszylinder einen Bremskraftverstärker aufweist. Das Fremdkraftbremssystem weist eine Fremdenergie betriebene hydraulische Druckquelle auf, beispielsweise eine Hydropumpe, die von einem Elektromotor angetrieben wird. Die erfindungsgemäße Bremsanlage eignet sich zum "Verblenden", also zu einem Ausgleich der Bremswirkung eines Elektro-Antriebsmotors eines Kraftfahrzeugs, der als Generator betrieben wird. Insbesondere wird die Bremswirkung des Bremssystems verringert, das die mit dem Elektro-Antriebsmotor angetriebenen Fahrzeugräder bremst. Auf diese Weise wird die Verteilung der Bremskraft auf die Vorder- und die Hinterachse nicht durch die Bremswirkung des Elektro-Antriebsmotors im Generatorbetrieb verändert. Ein steuerbarer Bremskraftverstärker ermöglicht durch Verringerung seiner Kraftverstärkung eine Erhöhung der zur Bremsbetätigung notwendigen Muskelkraft. Dadurch ist die übliche Muskelkraft zur Bremsbetätigung möglich, wenn die Bremswirkung der Bremsanlage verringert wird um die Bremswirkung des Elektro-Antriebsmotors im Generatorbetrieb auszugleichen.

Die Unteransprüche haben vorteilhafte Ausgestaltungen und Weiterbildungen der im Anspruch 1 angegebenen Erfindung zum Gegenstand.

Durch ein als Back-up Ventil bezeichnetes Ventil ist es möglich, das Fremdkraftbremssystem hydraulisch mit dem Hauptbremszylinder des Muskel- oder Hilfskraftbremssystems zu verbinden (Anspruch 2). Das Fremdkraftbremssystem kann dadurch bei Ausfall seiner Fremdenergiequelle als Muskel- oder Hilfskraftbremssystem verwendet werden.

Die Verfahrensansprüche 9 ff haben eine Steuerung der Bremsanlage zum Gegenstand, sie sind insbesondere darauf gerichtet, eine konstante Pedalkennlinie zu erreichen. Die Pedalkennlinie gibt die Abhängigkeit der zur Betätigung des Hauptbremszylinders notwendigen Muskelkraft vom Pedalweg wieder. Bei einer guten Steuerung merkt ein Fahrzeugführer nicht, dass die Bremswirkung der Bremsanlage verringert ist um die Bremswirkung des Elektro-Antriebsmotors im Generatorbetrieb auszugleichen, und zwar auch dann nicht, wenn sich die Bremswirkung des Elektro-Antriebsmotors im Generatorbetrieb ändert.

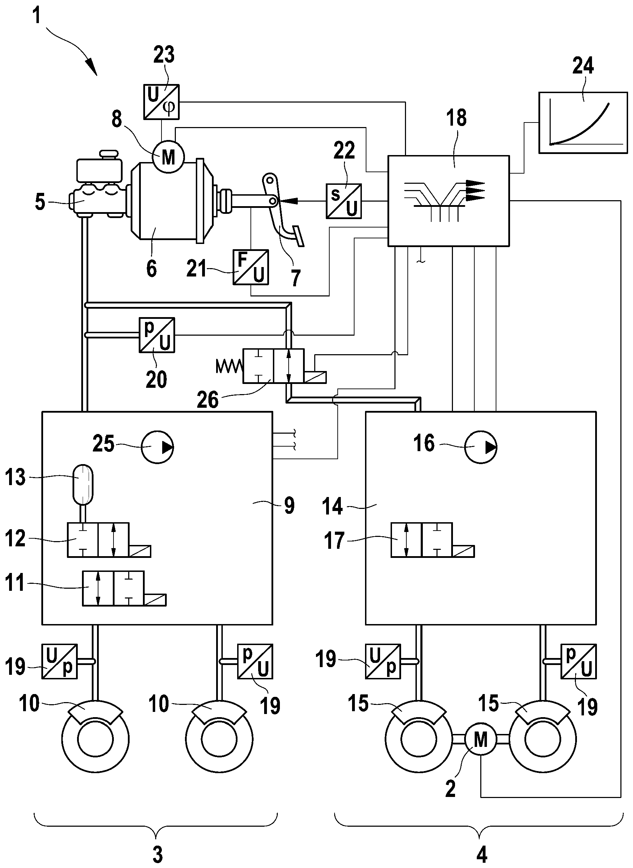

### Kurze Beschreibung der Zeichnung

Die Erfindung wird nachfolgend anhand einer in der Zeichnung dargestellten Ausführungsform näher erläutert. Die einzige Figur zeigt eine Schemadarstellung einer erfindungsgemäßen Bremsanlage. Die Darstellung ist teilweise vereinfacht und dient zur Erläuterung und zum Verständnis der Erfindung.

### Ausführungsform der Erfindung

Die in der Figur dargestellte, erfindungsgemäße Bremsanlage 1 ist für einen nicht dargestellten Kraftwagen mit Antrieb durch einen Elektro-Antriebsmotor 2 vorgesehen. Im Ausführungsbeispiel wirkt der Elektro-Antriebsmotor 2 auf die beiden Räder einer Fahrzeugachse, beispielsweise der Hinterachse. Der Elektro-Antriebsmotor 2 kann auch auf alle Fahrzeugräder wirken, es ist auch für jedes angetriebene Fahrzeugrad ein eigener Elektro-Antriebsmotor möglich. Zum Bremsen kann der Elektro-Antriebsmotor 2 als Generator betrieben werden. Es kann sich um einen Kraftwagen zu einem ausschließlich elektromotorischen Antrieb handeln; es kann sich auch um ein sog. Hybridfahrzeug mit Antrieb durch einen nicht dargestellten Verbrennungsmotor und den Elektro-Antriebsmotor 2 handeln, wobei der Antrieb abhängig vom Fahrzustand und Fahrwunsch durch den Verbrennungsmotor, den Elektro-Antriebsmotor 2 oder beispielsweise zu einem starken Beschleunigen durch beide Motoren erfolgen kann. Die Erfindung ist zwar für den Elektro-Antriebsmotor 2, der zum Bremsen als Generator betrieben werden kann, vorgesehen, unabhängig ob zusätzlich ein Verbrennungsmotor vorhanden ist oder nicht.

Die Bremsanlage 1 weist ein hydraulisches Hilfskraftbremssystem 3 und ein hydraulisches Fremdkraftbremssystem 4 auf, wobei das Hilfskraftbremssystem 3 auf die Fahrzeugräder einer Achse und das Fremdkraftbremssystem 4 auf die Fahrzeugräder einer anderen Achse wirkt. Beide Bremssysteme 3, 4 sind Betriebsbremssysteme.

Das Hilfskraftbremssystem 3 weist einen Hauptbremszylinder 5 mit einem elektromechanischen Bremskraftverstärker 6 auf. Die Betätigung des Hauptbremszylinders 5 erfolgt per Muskelkraft mit einem (Fuß-)Bremspedal 7. Der Bremskraftverstärker 6 ist steuerbar, d.h. seine Kraft bzw. Kraftverstärkung ist steuerbar, wobei unter "steuern" auch "regeln" zu verstehen ist. Der Bremskraftverstärker 6 weist einen Elektromotor 8 auf, mit dem über ein nicht einzeln dargestelltes Getriebe eine Kraft auf den Hauptbremszylinder 5, genau genommen auf einen Kolben des Hauptbremszylinders 5, ausübbar ist. Der Bremskraftverstärker 6 kann auch einen Linearmotor oder einen Elektromagneten zum Erzeugen der Verstärkerkraft aufweisen. Einen elektromechanischen Bremskraftverstärker mit einem Elektromagneten oder wahlweise einem Linearmotor offenbart die Offenlegungsschrift DE 100 57 557 A1.

An den Hauptbremszylinder 5 sind über ein Hydroaggregat 9 hydraulische Radbremsen 10 angeschlossen, die, wie bereits gesagt, den Fahrzeugrädern einer Fahrzeugachse, beispielsweise der Vorderachse, zugeordnet sind. Das Hydroaggregat 9 enthält hydraulische Komponenten einer Schlupfregelung wie beispielsweise eine Hydropumpe 25, Bremsdruckaufbauventile 11, Bremsdruckabsenkventile 12 und einen Hydrospeicher 13, die in der Zeichnung lediglich exemplarisch dargestellt sind. Solche Hydroaggregate 9 sind an sich bekannt und sollen deswegen an dieser Stelle nicht erläutert werden. Das Hydroaggregat 9 ermöglicht wie gesagt eine Schlupfregelung, beispielsweise eine Bremsblockierschutzregelung, eine Antriebsschlupfregelung und/oder eine Fahrdynamikregelung, für die Abkürzungen wie ABS, ASR, ESP und FDR gebräuchlich sind. Die Hydropumpe 25 solcher Schlupfregelungen wird auch als Rückförderpumpe bezeichnet.

Das Fremdkraftbremssystem 4 weist ebenfalls ein Hydroaggregat 14 auf, an das hydraulische Radbremsen 15 angeschlossen sind, die ebenfalls einer Fahrzeugachse, insbesondere der Hinterachse zugeordnet sind. Das Fremdkraftbremssystem 4 wirkt auf die Fahrzeugachse, deren Fahrzeugräder mit dem Elektro-Antriebsmotor 2 antreibbar und im Generatorbetrieb des Elektro-Antriebsmotors 2 bremsbar sind. Das Hydroaggregat 14 des Fremdkraftbremssystems 4 weist eine Hydropumpe 16 auf, die mit einem nicht dargestellten Elektromotor antreibbar ist und die eine Fremdenergie betriebene hydraulische Druckquelle bildet. Zur Schlupfregelung sind Bremsdruckaufbau- und Bremsdruckabsenkventile vorhanden, von denen symbolisch ein Ventil 17 dargestellt ist.

Über ein Ventil, das hier als Back-up Ventil 26 bezeichnet wird, ist das Fremdkraftbremssystem 4 hydraulisch mit dem Hauptbremszylinder 5 des Hilfskraftbremssystems 3 verbunden. Dadurch kann das Fremdkraftbremssystem 4 bei Ausfall seiner Hydropumpe 16 oder ihres Elektromotors gemeinsam mit dem Hilfskraftbremssystem 3 mit dessen Hauptbremszylinder 5 betätigt werden. Das Fremdkraftbremssystem 4 funktioniert dabei als Hilfskraftbremssystem. In der Darstellung ist das Back-up Ventil 26 ein in seiner stromlosen Grundstellung offenens 2/2-Wege-Magnetventil, das normalerweise (beispielsweise beim Einschalten einer Zündung eines Kraftfahrzeugs) bestromt und dadurch geschlossen ist und das bei Ausfall der Hydropumpe 16 oder ihres Elektromotors geöffnet wird. Es ist auch möglich, ein stromlos geschlossenes Ventil als Back-up Ventil 26 zu verwenden.

Zur Steuerung bzw. Regelung beider Bremssysteme 3, 4 ist ein elektronisches Steuergerät 18 vorhanden, mit dem eine radindividuelle Bremskraftsteuerung bzw. -regelung möglich ist. Das Steuergerät 18 steuert auch den Elektro-Antriebsmotor 2 einschließlich dessen Generatorbetrieb und den Bremskraftverstärker 6. Es erhält Signale von diversen Sensoren, beispielsweise von Radbremsdrucksensoren 19, die jeder Radbremse 10, 15 zugeordnet sind, von einem Drucksensor 20 für den Hauptbremszylinder 5, von einem Pedalkraftsensor 21 und einem Pedalwegsensor 22 sowie einem Positionssensor 23 des Bremskraftverstärkers.

Das Hilfskraftbremssystem 3 ist ebenso wie das Fremdkraftbremssystem 4 als Einkreis-Bremssystem ausgebildet, weil im Falle eines Ausfalls eines der beiden Bremssysteme 3, 4 eine Bremsung mit dem jeweils anderen Bremssystem 4, 3 möglich ist.

Wird zu einer Bremsbetätigung das Bremspedal 7 betätigt, wird, sofern es der Betriebszustand zulässt, der Elektro-Antriebsmotor 2 als Generator betrieben und die Bremswirkung der Bremsanlage 1 entsprechend der Bremswirkung des Elektro-Antriebsmotors 2 im Generatorbetrieb verringert. Mit anderen Worten: Es wird, wenn es möglich ist, eine Bremswirkung der Bremsanlage 1 und des Elektro-Antriebsmotors 2 im Generatorbetrieb erzeugt, die bei der gegebenen Stellung des Bremspedals 7 mit der Bremsanlage 1 ohne den Elektro-Antriebsmotor 2 erzielt würde. Vorzugsweise wird die Bremswirkung des Fremdkraftbremssystems 4 um die Bremswirkung des Elektro-Antriebsmotors 2 im Generatorbetrieb reduziert oder anders ausgedrückt es wird die Bremswirkung des Bremssystems 4 reduziert, das auf die Fahrzeugräder wirkt, auf die auch der Elektro-Antriebsmotor 2 wirkt. Dadurch ändert sich die Bremskraftverteilung auf die Fahrzeugachsen nicht durch die Bremswirkung des Elektro-Antriebsmotors 2 im Generatorbetrieb.

Ist die Bremswirkung des Elektro-Antriebsmotors 2 im Generatorbetrieb größer ist als die Bremswirkung des Fremdkraftbremssystems 4 bei einer gegebenen Stellung des Bremspedals 7 ohne die Bremswirkung des Elektro-Antriebsmotors 2 sein sollte, wird auch die Bremswirkung des Hilfskraftbremssystems 3 reduziert, so dass eine Gesamtbremswirkung des Elektro-Antriebsmotors 2 im Generatorbetrieb und der Bremsanlage 1 derjenigen entspricht, die die Bremsanlagen 1 ohne die Bremswirkung des Elektro-Antriebsmotors 2 bei der gegebenen Stellung des Bremspedals 7 haben sollte. Die Bremswirkung des Fremdkraftbremssystems 4 ist im geschilderten Fall Null, die Bremswirkung der Bremsanlage 1 ist die Bremswirkung des Hilfskraftbremssystem 3. Die Bremskraftverteilung auf die Fahrzeugachsen ändert sich im geschilderten Fall gegenüber der Bremskraftverteilung, die die Bremanlage 1 ohne die Bremswirkung des Elektro-Antriebsmotors 2 hätte.

Die Kraftverstärkung des Bremskraftverstärkers 6 wird reduziert, wenn die Bremswirkung des Elektro-Antriebsmotors 2 im Generatorbetrieb größer ist, als die Bremswirkung des Fremdkraftbremssystems 4 bei einer gegebenen Stellung des Bremspedals 7 ohne die Bremswirkung des Elektro-Antriebsmotors 2 sein sollte und infolge dessen auch die Bremswirkung des Hilfskraftbremssystem 3 entsprechend reduziert wird, so dass sich eine Betätigungskraft am Bremspedal 7 nicht durch die Bremswirkung des Elektro-Antriebsmotors 2 im Generatorbetrieb und die damit einhergehende Reduzierung der Bremswirkung der Bremsanlage 1 ändert. Eine Pedalkennlinie bleibt, so gut wie möglich, unverändert durch die Bremswirkung des Elektro-Antriebsmotors 2 im Generatorbetrieb. Die Pedalkennlinie ist die Abhängigkeit der Pedalkraft von der Pedalstellung, im Ausführungsbeispiel ist sie symbolisch mit der Bezugszahl 24 dargestellt. Auch durch eine Steuerung einer Springer-Funktion des Bremskraftverstärkers 6, die auch als "Jump in" bezeichnet wird, ist eine Steuerung der Pedalkennlinie möglich. Bei der Springer-Funktion wird bei niedriger Bremskraft der Bremsanlage 1 die auf den Hauptbremszylinder 5 ausgeübte Betätigungskraft vollständig vom Bremskraftverstärker 6 in Abhängigkeit von der Stellung des Bremspedals 7 erzeugt, die Pedalkraft ist konstant und niedrig. Die Springer-Funktion betrifft einen ersten Teil des Pedalwegs. Genau genommen handelt es sich um eine Fremdkraftbremsung mit der Kraft des Bremskraftverstärkers 6.

Ist die Bremswirkung des Hilfskraftbremssystems 3 selbst ohne die Wirkung des Bremskraftverstärkers 6 zu hoch, wird Bremsflüssigkeit aus den Radbremsen 10 durch die zugeordneten Bremsdruckabsenkventile 12 in den Hydrospeicher 13 abgelassen und dadurch die Bremskraft verringert. Mit den Bremsdruckaufbauventilen 11 und den Bremsdruckabsenkventilen 12, dem Hydrospeicher 13 und der Hydropumpe 25 ist eine Bremsdruckmodulation in den Radbremsen 10 und damit die gewünschte Reduzierung der Bremskraft des Hilfskraftbremssystem 3, wenn nötig bis auf Null, möglich.Die bei einer gegebenen Stellung des Bremspedals 7 übliche Pedalkraft lässt sich mit dem Bremskraftverstärker 6 erzeugen, sofern mit dem Bremskraftverstärker 6 eine Kraft erzeugbar ist, die der Betätigungsrichtung des Hauptbremszylinders 5 entgegengerichtet ist, also eine Gegenkraft zu einer auf das Bremspedal 7 ausgeübte Muskelkraft. Der Bremskraftverstärker 6 wirkt in diesem Fall als Pedalsimulator, mit dem eine von der Stellung des Bremspedals 7 abhängige, übliche Pedalkraft erzeugbar ist, auch wenn ein hydraulische Druck im Hauptbremszylinder 5 abgesenkt, u. U. sogar bis auf Null abgesenkt, ist. Mit üblicher Pedalkraft ist hier die auf das Bremspedal 7 ausgeübte Muskelkraft bei einer Bremsbetätigung ohne die Bremswirkung des Elektro-Antriebsmotors 2 gemeint. Sie ist abhängig von der Stellung des Bremspedals 7 bzw. vom Weg, um den das Bremspedal 7 niedergetreten wird und die/der mit dem Pedalwegsensor 22 gemessen wird.

## Patentansprüche

1. Bremsanlage für ein Kraftfahrzeug, mit einem hydraulischen Muskel- und Hilfskraftbremssystem (3), das einen mit Muskelkraft betätigbaren Hauptbremszylinder (5) aufweist, an den mindestens eine hydraulische Radbremse (10) angeschlossen ist, wobei die Bremsanlage (1) ein Fremdkraftbremssystem (4) mit einer Fremdenergie betriebenen hydraulischen Druckquelle (16), an die mindestens eine hydraulische Radbremse (15) angeschlossen ist, sowie einen Elektro-Antriebsmotor (2), der zum Bremsen des Kraftfahrzeugs als Generator betreibbar ist, aufweist wobei der Elektro-Antriebsmotor (2) auf mit dem Fremdkraftbremssystem (4) bremsbare Fahrzeugräder wirkt, **dadurch gekennzeichnet, dass** die Bremswirkung des Hilfskraftbremssystems (3) reduziert wird, wenn die Bremswirkung des Elektro-Antriebsmotors (2) im Generatorbetrieb größer ist als die Bremswirkung des Fremdkraftbremssystems (4) bei einer gegebenen Stellung eines Bremspedals (7) ohne die Bremswirkung des Elektro-Antriebsmotors (2) sein sollte.

2. Bremsanlage nach Anspruch 1, **dadurch gekennzeichnet, dass** die Bremsanlage (1) ein Back-up Ventil (26) aufweist, durch das das Fremdkraftbremssystem (4) mit dem Hauptbremszylinder (5) verbindbar ist.

3. Bremsanlage nach Anspruch 1, **dadurch gekennzeichnet, dass** der Hauptbremszylinder (5) einen Bremskraftverstärker (6) aufweist.

4. Bremsanlage nach Anspruch 3, **dadurch gekennzeichnet, dass** der Hauptbremszylinder (5) einen elektromechanischen Bremskraftverstärker (6) aufweist.

5. Bremsanlage nach Anspruch 3, **dadurch gekennzeichnet, dass** die Bremswirkung des Hilfskraftbremssystems (3) reduziert wird, indem die Kraftverstärkung des Bremskraftverstärkers (6) reduziert wird.

6. Bremsanlage nach Anspruch 1 und/oder 5, **dadurch gekennzeichnet, dass** das Muskel- oder Hilfskraftbremssystem (3) einen Hydrospeicher (13) aufweist, der über ein Ventil (12) an das Muskel- oder Hilfskraftbremssystem (3) angeschlossen ist und dass bei einem Generatorbetrieb des Elektro-Antriebsmotors (2) ein Bremsdruck des Muskel- oder Hilfskraftbremssystems (3) reduziert wird, indem Bremsflüssigkeit aus dem Muskel- oder Hilfskraftbremssystem (3) durch das Ventil (12) in den Hydrospeicher (13) ausgelassen wird.

7. Bremsanlage nach Anspruch 1, **dadurch gekennzeichnet, dass** die Bremswirkung des Hilfskraftbremssystems (3) derart reduziert wird, dass eine Gesamtbremswirkung des Elektro-Antriebsmotors (2) im Generatorbetrieb und der Bremsanlage (1) derjenigen entspricht, die die Bremsanlage (1) ohne die Bremswirkung des Elektro-Antriebsmotors (2) bei der gegebenen Stellung des Bremspedals (7) haben sollte.

8. Bremsanlage nach Anspruch 5, **dadurch gekennzeichnet, dass** die Kraftverstärkung des Bremskraftverstärkers (6) derart reduziert wird, dass sich eine Betätigungskraft am Bremspedal (7) nicht durch die Bremswirkung des Elektro-Antriebsmotors (2) im Generatorbetrieb und die damit einhergehende Reduzierung der Bremswirkung der Bremsanlage (1) ändert.

9. Verfahren zur Steuerung der Betätigung einer Bremsanlage für ein Kraftfahrzeug, mit einem hydraulischen Muskel- oder Hilfskraftbremssystem (3), das einen mit Muskelkraft betätigbaren Hauptbremszylinder (5) aufweist, an den mindestens eine hydraulische Radbremse (10) angeschlossen ist, wobei die Bremsanlage (1) ein Fremdkraftbremssystem (4) mit einer Fremdenergie betriebenen hydraulischen Druckquelle (16), an die mindestens eine hydraulische Radbremse (15) angeschlossen ist, sowie einen Elektro-Antriebsmotor (2), der zum Bremsen des Kraftfahrzeugs als Generator betreibbar ist, aufweist, wobei der Elektro-Antriebsmotor (2) auf mit dem Fremdkraftbremssystem (4) bremsbare Fahrzeugräder wirkt, **dadurch gekennzeichnet, dass** die Bremswirkung des Hilfskraftbremssystems (3) reduziert wird, wenn die Bremswirkung des Elektro-Antriebsmotors (2) im Generatorbetrieb größer ist als die Bremswirkung des Fremdkraftbremssystems (4) bei einer gegebenen Stellung eines Bremspedals (7) ohne die Bremswirkung des Elektro-Antriebsmotors (2) sein sollte.

10. Verfahren nach Anspruch 9, wobei der Hauptbremszylinder (5) einen steuerbaren Bremskraftverstärker (6) aufweist **dadurch gekennzeichnet, dass** die Bremswirkung des Hilfskraftbremssystems (3) reduziert wird, indem die Kraftverstärkung des Bremskraftverstärkers (6) reduziert wird.

11. Verfahren nach Anspruch 9 und/oder 10, **dadurch gekennzeichnet, dass** das Muskel- oder Hilfskraftbremssystem (3) einen Hydrospeicher (13) aufweist, der über ein Ventil (12) an das Muskel- oder Hilfskraftbremssystem (3) angeschlossen ist und dass bei einem Generatorbetrieb des Elektro-Antriebsmotors (2) ein Bremsdruck des Muskel- oder Hilfskraftbremssystems (3) reduziert wird, indem Bremsflüssigkeit aus dem Muskel- oder Hilfskraftbremssystem (3) durch das Ventil (12) in den Hydrospeicher (13) ausgelassen wird.

12. Verfahren nach Anspruch 9, **dadurch gekennzeichnet, dass** die Bremswirkung des Hilfskraftbremssystems (3) derart reduziert wird, dass eine Gesamtbremswirkung des Elektro-Antriebsmotors (2) im Generatorbetrieb und der Bremsanlage (1) derjenigen entspricht, die die Bremsanlage (1) ohne die Bremswirkung des Elektro-Antriebsmotors (2) bei der gegebenen Stellung des Bremspedals (7) haben sollte.

13. Verfahren nach Anspruch 10, **dadurch gekennzeichnet, dass** die Kraftverstärkung des Bremskraftverstärkers (6) derart reduziert wird, dass sich eine Betätigungskraft am Bremspedal (7) nicht durch die Bremswirkung des Elektro-Antriebsmotors (2) im Generatorbetrieb und die damit einhergehende Reduzierung der Bremswirkung der Bremsanlage (1) ändert.

14. Verfahren nach Anspruch 9 **dadurch gekennzeichnet, dass** das Muskel- oder Hilfskraftbremssystem (3) auf eine konstante Pedalkennlinie gesteuert wird.

15. Verfahren nach Anspruch 9, **dadurch gekennzeichnet dass** das Muskel- oder Hilfskraftbremssystem (3) auf eine bei Generatorbetrieb des Elektro-Antriebsmotors (2) im Vergleich mit einem Nicht-Generatorbetrieb unveränderte Pedalkennlinie gesteuert wird.

## Claims

1. Brake installation for a motor vehicle, which has a hydraulic muscle- and auxiliary-force brake system (3), said hydraulic muscle- and auxiliary-force brake system having a master brake cylinder (5) which is able to be actuated by muscle force and to which at least one hydraulic wheel brake (10) is connected, wherein the brake installation (1) has an external-force brake system (4), said external-force brake system having a hydraulic pressure source (16) which is operated with external energy and to which at least one hydraulic wheel brake (15) is connected, and has an electric drive motor (2) which is able to be operated as a generator for the purpose of braking the motor vehicle, wherein the electric drive motor (2) acts on vehicle wheels which are able to be braked by way of the external-force brake system (4), **characterized in that** the braking action of the auxiliary-force brake system (3) is reduced if the braking action of the electric drive motor (2) in the generator mode is greater than the braking action of the external-force brake system (4) should be for a given position of a brake pedal (7) without the braking action of the electric drive motor (2).

2. Brake installation according to Claim 1, **characterized in that** the brake installation (1) has a back-up valve (26) by which the external-force brake system (4) is able to be connected to the master brake cylinder (5).

3. Brake installation according to Claim 1, **characterized in that** the master brake cylinder (5) has a brake force booster (6).

4. Brake installation according to Claim 3, **characterized in that** the master brake cylinder (5) has an electromechanical brake force booster (6).

5. Brake installation according to Claim 3, **characterized in that** the braking action of the auxiliary-force brake system (3) is reduced **in that** the force boosting of the brake force booster (6) is reduced.

6. Brake installation according to Claim 1 and/or 5, **characterized in that** the muscle- or auxiliary-force brake system (3) has a hydraulic accumulator (13) which is connected via a valve (12) to the muscle- or auxiliary-force brake system (3), and **in that**, in a generator mode of the electric drive motor (2), a brake force of the muscle- or auxiliary-force brake system (3) is reduced **in that** brake fluid is discharged from the muscle- or auxiliary-force brake system (3) into the hydraulic accumulator (13) through the valve (12).

7. Brake installation according to Claim 1, **characterized in that** the braking action of the auxiliary-force brake system (3) is reduced such that an overall braking action of the electric drive motor (2) in the generator mode and of the brake installation (1) corresponds to that which the brake installation (1) should have without the braking action of the electric drive motor (2) for the given position of the brake pedal (7).

8. Brake installation according to Claim 5, **characterized in that** the force boosting of the brake force booster (6) is reduced such that an actuation force on the brake pedal (7) is not changed by the braking action of the electric drive motor (2) in the generator mode and the associated reduction in the braking action of the brake installation (1).

9. Method for controlling the actuation of a brake installation for a motor vehicle, which has a hydraulic muscle- or auxiliary-force brake system (3), said hydraulic muscle- or auxiliary-force brake system having a master brake cylinder (5) which is able to be actuated by muscle force and to which at least one hydraulic wheel brake (10) is connected, wherein the brake installation (1) has an external-force brake system (4), said external-force brake system having a hydraulic pressure source (16) which is operated with external energy and to which at least one hydraulic wheel brake (15) is connected, and has an electric drive motor (2) which is able to be operated as a generator for the purpose of braking the motor vehicle, wherein the electric drive motor (2) acts on vehicle wheels which are able to be braked by way of the external-force brake system (4), **characterized in that** the braking action of the auxiliary-force brake system (3) is reduced if the braking action of the electric drive motor (2) in the generator mode is greater than the braking action of the external-force brake system (4) should be for a given position of a brake pedal (7) without the braking action of the electric drive motor (2).

10. Method according to Claim 9, wherein the master brake cylinder (5) has a controllable brake force booster (6), **characterized in that** the braking action of the auxiliary-force brake system (3) is reduced **in that** the force boosting of the brake force booster (6) is reduced.

11. Method according to Claim 9 and/or Claim 10, **characterized in that** the muscle- or auxiliary-force brake system (3) has a hydraulic accumulator (13) which is connected via a valve (12) to the muscle- or auxiliary-force brake system (3), and **in that**, in a generator mode of the electric drive motor (2), a brake force of the muscle- or auxiliary-force brake system (3) is reduced **in that** brake fluid is discharged from the muscle- or auxiliary-force brake system (3) into the hydraulic accumulator (13) through the valve (12).

12. Method according to Claim 9, **characterized in that** the braking action of the auxiliary-force brake system (3) is reduced such that an overall braking action of the electric drive motor (2) in the generator mode and of the brake installation (1) corresponds to that which the brake installation (1) should have without the braking action of the electric drive motor (2) for the given position of the brake pedal (7).

13. Method according to Claim 10, **characterized in that** the force boosting of the brake force booster (6) is reduced such that an actuation force on the brake pedal (7) is not changed by the braking action of the electric drive motor (2) in the generator mode and the associated reduction in the braking action of the brake installation (1).

14. Method according to Claim 9, **characterized in that** the muscle- or auxiliary-force brake system (3) is controlled according to a constant pedal characteristic curve.

15. Method according to Claim 9, **characterized in that** the muscle- or auxiliary-force brake system (3) is controlled according to a pedal characteristic curve which is unchanged in the generator mode of the electric drive motor (2) in comparison with a non-generator mode.

## Revendications

1. Installation de freinage pour un véhicule automobile, comprenant un système de freinage hydraulique à force musculaire et d'assistance au freinage (3), qui présente un maître-cylindre de frein (5) pouvant être actionné par la force musculaire, auquel est raccordé au moins un frein de roue hydraulique (10), l'installation de freinage (1) présentant un système de freinage à force extérieure (4) avec une source de pression hydraulique (16) entraînée par une puissance extérieure à laquelle est raccordé au moins un frein de roue hydraulique (15), ainsi qu'un moteur d'entraînement électrique (2) qui peut fonctionner en tant que générateur pour freiner le véhicule automobile, le moteur d'entraînement électrique (2) agissant sur des roues du véhicule pouvant être freinées avec le système de freinage à force extérieure (4), **caractérisée en ce que** l'action de freinage du système d'assistance au freinage (3) est réduite lorsque l'action de freinage du moteur d'entraînement électrique (2) en mode générateur est supérieure à ce que l'action de freinage du système de freinage à force extérieure (4) devrait être pour une position donnée d'une pédale de frein (7) sans l'action de freinage du moteur d'entraînement électrique (2).

2. Installation de freinage selon la revendication 1, **caractérisée en ce que** l'installation de freinage (1) présente une soupape de secours (26) par laquelle le système de freinage à force extérieure (4) peut être raccordé au maître-cylindre de frein (5) .

3. Installation de freinage selon la revendication 1, **caractérisée en ce que** le maître-cylindre de frein (5) présente un servofrein (6).

4. Installation de freinage selon la revendication 3, **caractérisée en ce que** le maître-cylindre de frein (5) présente un servofrein électromécanique (6).

5. Installation de freinage selon la revendication 3, **caractérisée en ce que** l'action de freinage du système d'assistance au freinage (3) est réduite en réduisant l'amplification de force du servofrein (6).

6. Installation de freinage selon la revendication 1 et/ou 5, **caractérisée en ce que** le système de freinage à force musculaire ou d'assistance au freinage (3) présente un accumulateur hydraulique (13) qui est raccordé par le biais d'une soupape (12) au système de freinage à force musculaire ou d'assistance au freinage (3) et **en ce que** dans le cas d'un fonctionnement en mode générateur du moteur d'entraînement électrique (2), une pression de freinage du système de freinage à force musculaire ou d'assistance au freinage (3) est réduite en évacuant du liquide de frein hors du système de freinage à force musculaire ou d'assistance au freinage (3) à travers la soupape (12) dans l'accumulateur hydraulique (13).

7. Installation de freinage selon la revendication 1, **caractérisée en ce que** l'action de freinage du système d'assistance au freinage (3) est réduite de telle sorte qu'une action de freinage totale du moteur d'entraînement électrique (2) en mode générateur et de l'installation de freinage (1) corresponde à l'action de freinage totale que devrait avoir l'installation de freinage (1) sans l'action de freinage du moteur d'entraînement électrique (2) pour la position donnée de la pédale de frein (7).

8. Installation de freinage selon la revendication 5, **caractérisée en ce que** l'amplification de force du servofrein (6) est réduite de telle sorte qu'une force d'actionnement au niveau de la pédale de frein (7) ne varie pas sous l'effet de l'action de freinage du moteur d'entraînement électrique (2) en mode générateur et de la réduction associée de l'action de freinage de l'installation de freinage (1) .

9. Procédé de commande de l'actionnement d'une installation de freinage pour un véhicule automobile, comprenant un système de freinage hydraulique à force musculaire ou d'assistance au freinage (3) qui présente un maître-cylindre de frein (5) pouvant être actionné par la force musculaire, auquel est raccordé au moins un frein de roue hydraulique (10), l'installation de freinage (1) présentant un système de freinage à force extérieure (4) avec une source de pression hydraulique (16) entraînée par une puissance extérieure à laquelle est raccordé au moins un frein de roue hydraulique (15), ainsi qu'un moteur d'entraînement électrique (2) qui peut fonctionner en tant que générateur pour freiner le véhicule automobile, le moteur d'entraînement électrique (2) agissant sur des roues du véhicule pouvant être freinées avec le système de freinage à force extérieure (4), **caractérisé en ce que** l'action de freinage du système d'assistance au freinage (3) est réduite lorsque l'action de freinage du moteur d'entraînement électrique (2) en mode générateur est supérieure à ce que l'action de freinage du système de freinage à force extérieure (4) devrait être pour une position donnée d'une pédale de frein (7) sans l'action de freinage du moteur d'entraînement électrique (2).

10. Procédé selon la revendication 9, dans lequel le maître-cylindre de frein (5) présente un servofrein commandable (6), **caractérisé en ce que** l'action de freinage du système d'assistance au freinage (3) est réduite en réduisant l'amplification de force du servofrein (6).

11. Procédé selon la revendication 9 et/ou 10, **caractérisé en ce que** le système de freinage à force musculaire ou d'assistance au freinage (3) présente un accumulateur hydraulique (13) qui est raccordé par le biais d'une soupape (12) au système de freinage à force musculaire ou d'assistance au freinage (3) et **en ce que** dans le cas d'un fonctionnement en mode générateur du moteur d'entraînement électrique (2), une pression de freinage du système de freinage à force musculaire ou d'assistance au freinage (3) est réduite en évacuant du liquide de frein hors du système de freinage à force musculaire ou d'assistance au freinage (3) à travers la soupape (12) dans l'accumulateur hydraulique (13).

12. Procédé selon la revendication 9, **caractérisé en ce que** l'action de freinage du système d'assistance au freinage (3) est réduite de telle sorte qu'une action de freinage totale du moteur d'entraînement électrique (2) en mode générateur et de l'installation de freinage (1) corresponde à l'action de freinage totale que devrait avoir l'installation de freinage (1) sans l'action de freinage du moteur d'entraînement électrique (2) pour la position donnée de la pédale de frein (7).

13. Procédé selon la revendication 10, **caractérisé en ce que** l'amplification de force du servofrein (6) est réduite de telle sorte qu'une force d'actionnement au niveau de la pédale de frein (7) ne varie pas sous l'effet de l'action de freinage du moteur d'entraînement électrique (2) en mode générateur et de la réduction associée de l'action de freinage de l'installation de freinage (1).

14. Procédé selon la revendication 9, **caractérisé en ce que** le système de freinage à force musculaire ou d'assistance au freinage (3) est commandé à une courbe caractéristique constante de la pédale.

15. Procédé selon la revendication 9, **caractérisé en ce que** le système de freinage à force musculaire ou d'assistance au freinage (3) est commandé à une courbe caractéristique de la pédale ne variant pas pour un fonctionnement en mode générateur du moteur d'entraînement électrique (2) par comparaison avec un fonctionnement non en mode générateur.
